# EUROPÄISCHE PATENTSCHRIFT

(11) **EP 0 990 367 B1**
(45) Veröffentlichungstag und Bekanntmachung des Hinweises auf die Patenterteilung: **15.06.2005**
(21) Anmeldenummer: 98967070.8
(22) Anmeldetag: 11.04.1998
(51) Int. Cl.: H04Q 11/04

(54) **VERBINDUNGSAUFBAU-ÜBERWACHUNGSVORRICHTUNG**
DEVICE FOR MONITORING A CONNECTION SETUP
DISPOSITIF DE CONTROLE DE L'ETABLISSEMENT D'UNE CONNEXION

(30) Priorität: 16.05.1997 DE 19720719
(43) Veröffentlichungstag der Anmeldung: 05.04.2000
(73) Patentinhaber: Deutsche Telekom AG, 53113 Bonn (DE)
(72) Erfinder: Stolz, Helmut, 57080 Siegen (DE)
(86) Internationale Anmeldenummer: PCT/EP1998/002121
(87) Internationale Veröffentlichungsnummer: WO 1998/053635

(56) Entgegenhaltungen:
- GB-A- 2 301 264
- US-A- 5 369 707
- US-A- 5 548 635

## Beschreibung

Die Erfindung handelt von einer vorrichtung zum Schutz einer an ein digitales Kommunikationsnetz angeschalteten Datenendeinrichtung, insbesondere eines Personal Computers, gegen unberechtigte externe Zugriffe.

Solche Nachrichtenübertragungsschutzsysteme sind z.B. aus GB-A-2 301 264 oder US-A-5 369 707 bekannt.

Datenendgeräte, wie z. B. Faxgeräte oder Personal Computer, sind teilnehmerseitig mittels einer eingesteckten ISDN-Schnittstellenkärte an den S₀-Bus einer ISDN-Anschlußkonfiguration angeschaltet. Es sind heutzutage Angriffssszenarien bekannt, bei denen während der Herstellung von solchen ISDN-Schnittstellenkarten in die jeweilige Kommunikations-Anwendungsschnittstelle sogenannte "Viren" oder "Trojanische Pferde" implementiert werden. Solche "Trojanischen Pferde" enthalten die Rufnummer eines Eindringlings und sind in der Lage, von dem befallenen Datenendgerät aus einen Verbindungsaufbau zu dem Eindringling aufzubauen, der danach unmittelbaren Zugriff zu Datenbeständen und Anwendungsprogrammen des befallenen Datenendgeräts hat.

Der Erfindung liegt daher die Aufgabe zugrunde, eine Vorrichtung zu schaffen, mit der an ein digitales Kommunikationsnetz angeschaltete Datenendeinrichtungen gegen unberechtigte externe Zugriffe geschützt werden können.

Dieses technische Problem löst die Erfindung mit den Merkmalen des Anspruchs 1. vorteilhafte weiterbildungen sind in den Unteransprüchen angegeben.

Um einen unberechtigten externen Zugriff auf eine an ein digitales Kommunikationsnetz angeschaltete Datenendeinrichtung zu verhindern, ist eine Vorrichtung, im Nachfolgenden "Verbindungsaufbau-Überwachungsgerät" genannt, zwischen wenigstens eine Datenendeinrichtung und eine Netzabschlußeinrichtung, die über eine Endeinrichtungs-Anschlußleitung verbunden sind, zwischengeschaltet. Das Verbindungsaufbau-Überwachungsgerät enthält wenigstens eine erste Speichereinrichtung zum Zwischenspeichern einer von der Datenendeinrichtung über einen Steuerkanal übertragenen Rufnummer. Darüber hinaus ist eine zweite Speichereinrichtung vorgesehen, in der wenigstens eine vorbestimmte Rufnummer ablegbar ist. Eine Vergleichseinrichtung dient dazu, die zwischengespeicherte Rufnummer mit jeder vorbestimmten gespeicherten Rufnummer zu vergleichen. Ferner enthält das Verbindungsaufbau-Überwachungsgerät eine Einrichtung, die in Abhängigkeit von einem positiven vergleichsergebnis der Vergleichseinrichtung die zwischengespeicherte Rufnummer zur Netzabschlußeinrichtung weiterleitet und in Abhängigkeit von einem negativen Vergleichsergebnis die Weitergabe der Rufnummer sperrt und damit einen Verbindungsaufbau zu einem der Rufnummer zugeordneten Teilnehmer verhindert.

Sind mehrere Datenendeinrichtungen an die Endeinrichtungs-Anschlußleitung angeschaltet, so ist in der zweiten Speichereinrichtung für jede Datenendeinrichtung wenigstens eine vorbestimmte Rufnummer abgespeichert. Auf diese Weise kann jede angeschaltete Datenendeinrichtung nur zu dem Teilnehmer eine Verbindung aufbauen, dessen Rufnummer in der zweiten Speichereinrichtung abgelegt ist.

Das Verbindungsaufbau-Überwachungsgerät weist ferner eine Steuereinrichtung auf, die zweckmäßigerweise bei einem negativen vergleichsergebnis die zwischengespeicherte Rufnummer aus der ersten Speichereinrichtung löscht.

Teilnehmerseitig ist in dem Verbindungsaufbau-Überwachungsgerät ein Steuerkanal-Decoder vorgesehen, der die von der rufenden Datenendeinrichtung übertragene Verbindungsaufbauinformation empfängt und daraus die Rufnummer und die Identifikationsnummer der rufenden Datenendeinrichtung gewinnt.

Die Steuereinrichtung ist derart programmiert, daß sie unter Ansprechen auf die vom Steuerkanal-Decoder erhaltene Identifikationsnummer nur die in der zweiten Speichereinrichtung gespeicherten Rufnummern an die vergleichseinrichtung anlegt, die der entsprechenden Datenendeinrichtung zugeordnet sind. Auf diese Weise wird verhindert, daß die Vergleichseinrichtung die zwischengespeicherte Rufnummer mit allen in der zweiten Speichereinrichtung gespeicherten Rufnummern vergleichen muß.

Wird der Steuereinrichtung von der Vergleichseinrichtung signalisiert, daß die zwischengespeicherte Rufnummer mit einer der in der zweiten Speichereinrichtung gespeicherten Rufnummer übereinstimmt, deaktiviert sie den Steuerkanal-Decoder, so daß nach einem verbindungsaufbau die Endeinrichtungs-Anschlußleitung von der angeschalteten Datenendeinrichtung durch das Verbindungsaufbau-Überwachungsgerät zur Netzabschlußeinrichtung durchgeschaltet ist.

Die erste Speichereinrichtung zur Zwischenspeicherung einer zu rufenden Rufnummer ist zweckmäßigerweise ein Schieberegister, in das die Rufnummer seriell eingetaktet wird.

Gemäß einem Ausführungsbeispiel weist die Netzabschlußeinrichtung eine ISDN-Anschlußkonfiguration mit einer S₀-Schnittstelle auf. Die ISDN-Anschlußkonfiguration kann für einen Basisanschluß umfassend zwei Nutzkanäle und einen Steuerkanal oder einen Primärmultiplexanschluß umfassend 30 Nutzkanäle und einen Steuerkanal ausgelegt sein. Bei der Endeinrichtungs-Anschlußleitung handelt es sich in diesem Fall um einen S₀-Bus, wobei der Steuerkanal der D-Kanal ist.

Das verbindungsaufbau-Überwachungsgerät kann eine Tastatur zur Eingabe der vorbestimmten Rufnummern in die zweite Speichereinrichtung aufweisen. Ergänzend oder alternativ kann eine Schnittstelle zum Anschalten eines Computers vorgesehen sein, über den die Steuereinrichtung programmierbar ist und die vorbestimmten Rufnummern für die jeweiligen Datenendeinrichtungen eingegeben werden können.

Falls ein externer Angriff auf eine angeschaltete Datenendeinrichtung erfolgt, ist eine Einrichtung zur optischen und/oder akustischen Signalisierung eines Verbindungsabbruchs vorgesehen.

Anstatt das verbindungsaufbau-Überwachungsgeräts als separate Einheit in die Endeinrichtungs-Anschlußleitung einzuschleifen, ist es denkbar, das Gerät in der Netzabschlußeinrichtung anzuordnen.

Die Erfindung wird nachfolgend anhand eines Ausführungsbeispiels in Verbindung mit den beiliegenden Zeichnungen näher erläutert. Es zeigen:
Fig. 1 ein stark vereinfachtes Blockschaltbild eines ISDN-Netzes, an das beispielsweise zwei Endeinrichtungen angeschaltet sind, und
Fig. 2 das in Fig. 1 dargestellte, erfindungsgemäße Verbindungsaufbau-Überwachungsgerät.

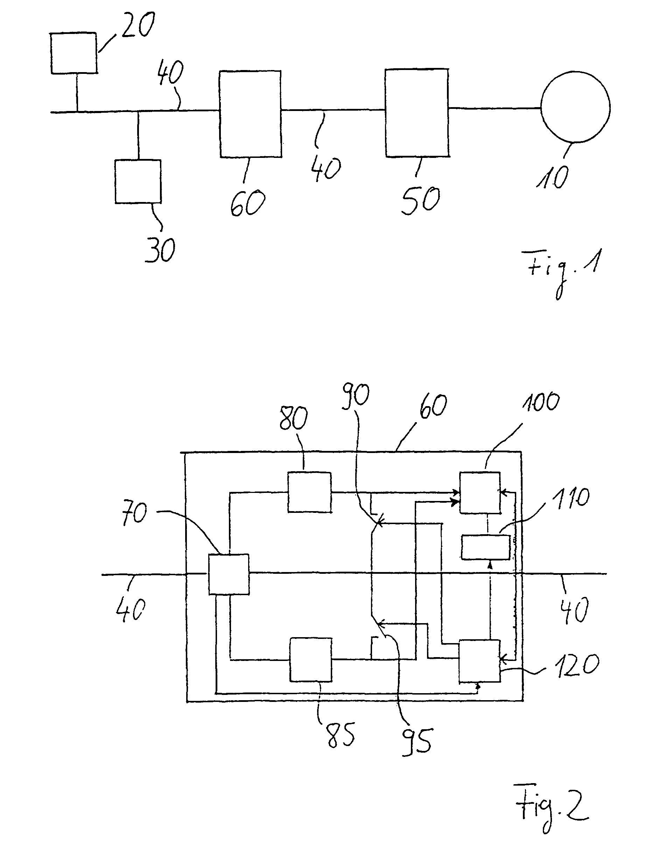

Fig. 1 zeigt schematisch dargestellt ein ISDN-Netz 10, an das zwei Datenendeinrichtungen, in unserem Beispiel zwei Personal-Computer 20 und 30, über einen S₀-Bus 40 und über eine Netzabschlußeinrichtung 50 angeschaltet sind. Für unser Beispiel sei angenommen, daß die Netzabschlußeinrichtung 50 für einen ISDN-Basisanschluß umfassend zwei B-Kanäle (Nutzkanäle) und einen D-Kanal (Steuerkanal) ausgebildet ist. Es sei darauf hingewiesen, daß die Erfindung in jedem digitalen Kommunikationsnetz Anwendung finden kann, in dem Verbindungsaufbauinformationen über einen getrennten Steuerkanal übertragen werden. Jeder Personal-Computer 20, 30 ist mit einer ISDN-Schnittstellenkarte versehen, über die er an den S₀-Bus 40 angeschaltet ist. Der hier benutzte S₀-Bus 40 kann mit maximal acht Endeinrichtungen verbunden sein. Falls in einer oder beiden ISDN-Schnittstellenkarten der jeweiligen Computer 20 und 30 ein sogenanntes Trojanisches Pferd implementiert ist, können die befallenen Computer 20 und 30 veranlaßt werden, zu einem Angreifer eine Verbindung aufzubauen, über die der Angreifer unmittelbar in die Personal-Computer 20 und 30 eindringen kann. Um einen solchen Angriff zu vermeiden, ist teilnehmerseitig in den S₀-Bus 40 zwischen den Personal-Computern 20 und 30 und der Netzabschlußeinrichtung 50 ein Verbindungsaufbau-Überwachungsgerät 60 eingeschleift. Wie nachfolgend noch ausführlicher erläutert wird, dient das Verbindungsaufbau-Überwachungsgerät 60 dazu, den Aufbau einer Verbindung nur zu vorbestimmten-Teilnehmern zuzulassen.

Fig. 2 zeigt ein mögliches Blockschaltbild zur schaltungstechnischen Realisierung des Verbindungsaufbau-Überwachungsgerätes 60. Teilnehmerseitig weist das verbindungsaufbau-Überwachungsgerät einen Steuerkanal-Decoder, in unserem Beispiel einen D-Kanal-Decoder 70, auf. Der D-Kanal-Steuerkanal-Decoder 70 hat die Aufgabe, die von den Personal-Computern 20 und 30 kommenden Verbindungsaufbau-Informationen zu empfangen und daraus die gewünschte Rufnummer sowie die den jeweiligen Personal-Computer kennzeichnende Identifikationsnummer zu gewinnen. Da der hier benutzte ISDN-Basisanschluß über zwei B-Kanäle verfügt, können die beiden Personal-Computer 20 und 30 gleichzeitig mit verschiedenen Teilnehmern kommunizieren. Aus diesem Grund ist der D-Kanal-Decoder 70 ausgangsseitig mit zwei Speichereinrichtungen 80, 85 verbunden. Die Speichereinrichtungen 80, 85 können als Schieberegister ausgebildet sein. Eingangsseitig ist der D-Kanal-Decoder mit dem S₀-Bus 40 verbunden. Der S₀-Bus 40 verläßt ausgangsseitig den D-Steuerkanal-Decoder 70 und führt an den Eingang der Netzabschlußeinrichtung 50. Jedes Schieberegister 80, 85 ist beispielsweise über einen Schalter 90 bzw. 95 mit dem S₀-Bus 40 am Ausgang des D-Steuerkanal-Decoders 70 verbunden. Der D-Steuerkanal-Decoder 70 filtert, wie bereits erwähnt, aus der Verbindungsaufbauinformation die Rufnummer aus und schiebt sie in eines der Schieberegister 80, 85 ein. Der Ausgang der Schieberegister 80, 85 ist jeweils eingangsseitig mit einer vergleichseinrichtung 100 verbunden. An einen weiteren Eingang der Vergleichseinrichtung 100 ist eine Speichereinrichtung 110 angeschlossen, in der für jeden Personal-Computer 20 und 30 vorbestimmte Rufnummern abgelegt sind. Eine Steuereinrichtung 120 ist eingangsseitig mit einem Ausgang des D-Steuerkanal-Decoders 70 verbunden und empfängt von dem D-Steuerkanal-Decoder 70 die Identifikationsnummer des jeweils rufenden Personal-Computers 20 und/oder 30. Ferner ist die Steuereinrichtung 120 mit den beiden Schaltern 90 und 95, der Speichereinrichtung 110 und der Vergleichseinrichtung 100 verbunden. Das Verbindungsaufbau-Überwachungsgerät 60 kann ferner eine Tastatur aufweisen, über die die vorbestimmten Rufnummern für die Personal-Computer 20 und 30 in die Speichereinrichtung 110 eingegeben werden können. Alternativ oder ergänzend kann das Verbindungsaufbau-Überwachungsgerät 60 eine Schnittstelle aufweisen, an die ein Computer (nicht dargestellt) angeschaltet sein kann. Mit Hilfe des Computers können beispielsweise vorbestimmte Rufnummern in die Speichereinrichtung 110 eingeschrieben werden. Die Steuereinrichtung 120 ist auch mit einer optischen und/oder akustischen Warneinrichtung (nicht dargestellt) verbunden. Die Warneinrichtung wird von der Steuereinrichtung 120 aktiviert, einen Verbindungsabbruch zu signalisieren, wenn die Vergleichseinrichtung 100 feststellt, daß die im Schieberegister 80 und/oder 85 zwischengespeicherte Rufnummer nicht mit einer der in der Speichereinrichtung 110 abgelegten Rufnummer übereinstimmt. Beispielsweise kann das Warnsignal über den D-Kanal des S₀-Busses 40 zum Personal-Computer 20, 30 gesendet werden und dort ein optisches oder akustisches Warnsignal auslösen. Obwohl das erfindungsgemäße Verbindungsaufbau-Überwachungsgerät 60 als separate Einrichtung beschrieben ist, kann es in der Netzabschlußeinrichtung 50 selbst angeordnet sein. Die Speisung des Verbindungsaufbau-Überwachungsgeräts 60 erfolgt beispielsweise über eine eigene Stromversorgungseinrichtung (nicht dargestellt).

Es wird nunmehr die Funktionsweise des erfindungsgemäßen Verbindungsaufbau-Überwachungsgeräts 60 erläutert. Es sei angenommen, daß in der Speichereinrichtung 110 für den Personal-Computer 20 zwei Rufnummern, beispielsweise die Rufnummern 1010 und 1111, und für den Personal-Computer 30 ebenfalls zwei Rufnummern, beispielsweise die Rufnummern 1000 und 0001, abgelegt sind. Im Anfangszustand seien ferner die Schalter 90 und 95 geöffnet. Wir gehen zunächst davon aus, daß der Personal-Computer 20 einen Verbindungsaufbau zu einem Teilnehmer mit der Rufnummer 1111 einleiten möchte. Dazu sendet er über den D-Kanal des S₀-Busses 40 in einem festgelegten Protokoll die Rufnummer 1111 zum ISDN-Netz 10. Die vom Personal-Computer 20 ausgesendete Verbindungsaufbauinformation, die sowohl die Rufnummer 1111 als auch seine Identifikationsnummer enthält, wird zum D-Kanal-Decoder 70 des Verbindungsaufbau-Überwachungsgerätes 60 übertragen. Der D-Kanal-Decoder 70 leitet aus der Verbindungsaufbauinformation die Identifikationsnummer ab und überträgt sie zur Steuereinrichtung 120. Die Steuereinrichtung 120 sorgt dafür, daß die beiden in der Speichereinrichtung 110 für den Personal-Computer 20 gespeicherten Rufnummern 1111 und 1010 nacheinander an die Vergleichseinrichtung 100 angelegt werden. Der D-Kanal-Decoder 70 leitet außerdem aus den empfangenen Verbindungsaufbauinformationen die Rufnummer 1111 ab und leitet sie an das Schieberegister 80 weiter. Anschließend wird die zwischengespeicherte Rufnummer des Schieberegisters 80 an die Vergleichseinrichtung 100 angelegt und nacheinander mit den beiden Rufnummern, die von dem Speicherregister 110 angelegt werden, verglichen. Die Vergleichseinrichtung 100 signalisiert der Steuereinrichtung 120, daß die zwischengespeicherte Rufnummer mit einer der beiden vorbestimmten Rufnummern übereinstimmt, die dem Personal-Computer 20 zugeordnet sind. Daraufhin schließt die Steuereinrichtung 120 den Schalter 90, und das Schieberegister 80 schiebt die gespeicherte Rufnummer 1111 auf den S₀-Bus 40. Die akzeptierte Rufnummer wird über die Netzabschlußeinrichtung 50 zu einer entsprechenden Vermittlungsstelle des ISDN-Netzes 10 übertragen, woraufhin eine Verbindung zwischen dem Personal-Computer 20 und dem gerufenen Teilnehmer mit der Rufnummer 1111 hergestellt wird. Nachdem die Rufnummer zum ISDN-Netz 10 übertragen worden ist, deaktiviert die Steuereinrichtung 120 den D-Kanal-Decoder 70 und öffnet wieder den Schalter 90. Auf diese Weise ist der Personal-Computer 20 unmittelbar über den S₀-Bus 40 mit der Netzabschlußeinrichtung 50 und mit dem gerufenen Teilnehmer verbunden. Jetzt können zwischen dem gerufenen Teilnehmer und dem Personal-Computer 20 Daten ausgetauscht werden.

Es sei ferner angenommen, daß auch der zweite Personal-Computer 30 einen Verbindungswunsch hat. Dazu sendet der Personal-Computer 30 seine Verbindungsaufbauinformationen zunächst zum D-Steuerkanal-Decoder 70. In unserem Beispiel enthält aber die ISDN-Schnittstellenkarte des Personal-Computers 30 ein Trojanisches Pferd, das diesen Verbindungsaufbauwunsch mit der Rufnummer 0110 einleiten möchte. Der D-Kanal-Decoder 70 filtert die Rufnummer aus der Verbindungsaufbauinformation heraus und schiebt sie in das Schieberegister 85. Ferner entnimmt der D-Kanal-Decoder 70 der Verbindungsaufbauinformations die Identifikationsnummer des Personal-Computers 30 und leitet diese der Steuereinrichtung 120 zu. Die Steuereinrichtung 120 sorgt wiederum dafür, daß diesmal die beiden dem Personal-Computer 30 zugeordneten Rufnummern 0001 und 1000 aus der Speichereinrichtung 110 an die Vergleichseinrichtung 100 nacheinander angelegt werden. Die Vergleichseinrichtung 100 vergleicht nun nacheinander die in dem Schieberegister 85 zwischengespeicherte Rufnummer 0110 mit den zulässigen Rufnummern für den Personal-Computer 30. Da die Vergleichseinrichtung 100 keine Übereinstimmung zwischen den Rufnummern feststellt, bleibt der Schalter 95 geöffnet, und der Verbindungsaufbau wird damit abgebrochen. Gleichzeitig löscht die Steuereinrichtung 120 den Inhalt des Schieberegisters 85.

Darüber hinaus wird die nicht dargestellte optische und akustische Warneinrichtung aktiviert, um den Verbindungsabbruch und damit dem Teilnehmer einen externen Angriff auf den Personal-Computer 30 zu signalisieren.

## Patentansprüche

1. Vorrichtung zum Schutz einer an ein digitales Kommunikationsnetz angeschalteten Datenendeinrichtung gegen unberechtigte externe Zugriffe, mit folgenden Merkmalen:
die Vorrichtung (60) ist zwischen wenigstens eine Datenendeinrichtung (20, 30) und eine Netzabschlußeinrichtung (50), die über eine Endeinrichtungs-Anschlußleitung (40) verbunden sind, zwischengeschaltet,
wenigstens eine erste Speichereinrichtung (80, 85) zum Zwischenspeichern einer von der Datenendeinrichtung (20, 30) über einen Steuerkanal übertragenen Rufnummer,
eine zweite Speichereinrichtung (110), in der wenigstens eine vorbestimmte Rufnummer ablegbar ist,
eine Vergleichseinrichtung (100), die die zwischengespeicherte Rufnummer mit jeder gespeicherten Rufnummer vergleicht, und
eine Einrichtung (120, 90, 95), die in Abhängigkeit von einem positiven Vergleichsergebnis die zwischengespeicherte Rufnummer zur Netzabschlußeinrichtung (50) weiterleitet oder in Abhängigkeit von einem negativen Vergleichsergebnis die Weitergabe der Rufnummer sperrt.

2. Vorrichtung nach Anspruch 1, **dadurch gekennzeichnet, daß** in der zweiten Speichereinrichtung (110) für jede Datenendeinrichtung (20, 30) wenigstens eine vorbestimmte Rufnummer speicherbar ist.

3. Vorrichtung nach Anspruch 1 oder 2, **gekennzeichnet durch** eine Steuereinrichtung (120), die bei einem negativen Vergleichsergebnis die Rufnummer aus der ersten Speichereinrichtung (80, 85) löscht, und **durch** einen Steuerkanal-Decoder (70), der aus einer von der Datenendeinrichtung (20, 30) übertragenen Verbindungsaufbauinformation die Rufnummer und die Identifikationsnummer der Datenendeinrichtung (20, 30) erhält.

4. Vorrichtung nach Anspruch 3, **dadurch gekennzeichnet, daß** die Steuereinrichtung (120) derart ausgestaltet ist, daß sie unter Ansprechen auf die vom Steuerkanal-Decoder (70) erhaltene Identifikationsnummer nur die in der zweiten Speichereinrichtung (110) gespeicherten Rufnummern an die Vergleichseinrichtung (100) anlegt, die der entsprechenden Datenendeinrichtung (20, 30) zugeordnet sind.

5. Vorrichtung nach Anspruch 3 oder 4, **dadurch gekennzeichnet, daß** die Steuereinrichtung (120) derart ausgestaltet ist, daß sie bei einem positiven vergleichsergebnis den Steuerkanal-Decoder (70) deaktiviert.

6. Vorrichtung nach einem der Ansprüche 1 bis 5, **dadurch gekennzeichnet, daß** die erste Speichereinrichtung (80, 85) ein Schieberegister ist.

7. Vorrichtung nach einem der Ansprüche 1 bis 6, **dadurch gekennzeichnet, daß** die Netzabschlußeinrichtung (50) eine ISDN-Anschlußkonfiguration mit einer S_{O}-Schnittstelle aufweist, daß die Endeinrichtungs-Anschlußleitung (40) ein Sₒ-Bus ist, und daß der Steuerkanal der D-Kanal ist.

8. Vorrichtung nach einem der Ansprüche 1 bis 7, **gekennzeichnet durch** eine Tastatur zur Eingabe der vorbestimmten Rufnummern.

9. vorrichtung nach einem der Ansprüche 1 bis 8, **gekennzeichnet durch** eine Schnittstelle zum Anschalten eines Computers.

10. Vorrichtung nach einem der Ansprüche 1 bis 9, **gekennzeichnet durch** eine Einrichtung zur optischen und/oder akustischen Signalisierung eines Verbindungsabbruchs bei einem negativen Vergleichsergebnis.

11. Vorrichtung nach einem der Ansprüche 1 bis 10, **dadurch gekennzeichnet, daß** die Vorrichtung (60) in der Netzabschlußeinrichtung (50) integriert ist.

12. Vorrichtung nach einem der Ansprüche 1 bis 11, **gekennzeichnet durch** eine Energieversorgungseinrichtung.

## Claims

1. Device for protecting a data terminal device connected to a digital communications network from unauthorized external access, having the following features:
the device (60) is interposed between at least one data terminal device (20, 30) and
a network termination device (50), which are connected by a terminal device connecting line (40),
at least one first storage device (80, 85) for temporary storage of a call number transmitted by the data terminal device (20, 30) through a control channel,
a second storage device (110) in which at least one predefined call number can be stored,
a comparator (100) that compares the temporarily stored call number with each stored call number, and
a device (120, 90, 95) that in the event of a positive comparison result transmits the temporarily stored call number to the network termination device (50), or in the event of a negative comparison result blocks the transmission of the call number.

2. Device according to claim 1, **characterized in that** at least one predefined call number can be stored in the second storage device (110) for each data terminal device (20, 30).

3. Device according to claim 1 or 2, **characterized by** a control device (120) that deletes the call number from the first storage device (80, 85) in the event of a negative comparison result, and further **characterized by** a control channel decoder (70) that obtains the call number and the identification number of the data terminal device (20, 30) from connection setup information transmitted by the data terminal device (20, 30).

4. Device according to claim 3, **characterized in that** the control device (120) is designed such that, in response to the identification number received from the control channel decoder (70), it delivers to the comparator (100) only the call numbers stored in the second storage device (110) that are assigned to the corresponding data terminal device (20, 30).

5. Device according to claim 3 or 4, **characterized in that** the control device (120) is designed such that it deactivates the control channel decoder (70) in the event of a positive comparison result.

6. Device according to one of claims 1 through 5, **characterized in that** the first storage device (80, 85) is a shift register.

7. Device according to one of claims 1 through 6, **characterized in that** the network termination device (50) has an ISDN connection configuration with an Sₒ interface, **in that** the terminal device connecting line (40) is an Sₒ bus, and **in that** the control channel is the D channel.

8. Device according to one of claims 1 through 7, **characterized by** a keyboard for entry of the predefined call numbers.

9. Device according to one of claims 1 through 8, **characterized by** an interface for connecting a computer.

10. Device according to one of claims 1 through 9, **characterized by** a device for visually and/or acoustically signaling a connection termination in the event of a negative comparison result.

11. Device according to one of claims 1 through 10, **characterized in that** the device (60) is integrated into the network termination device (50).

12. Device according to one of claims 1 through 11, **characterized by** a power supply device.

## Revendications

1. Dispositif de protection d'un équipement terminal de données raccordé à un réseau de communication numérique contre un accès externe non autorisé, présentant les caractéristiques suivantes :
le dispositif (60) est connecté entre au moins un équipement terminal de données (20, 30) et un équipement de terminaison de réseau (50), lesquels sont reliés par une liaison de raccordement d'équipements terminaux (40),
au moins un premier équipement de sauvegarde (80, 85) pour le stockage intermédiaire d'un numéro d'appel transmis via un canal de commande par l'équipement terminal de données (20, 30),
un deuxième équipement de sauvegarde (110) dans lequel peut être sauvegardé au moins un numéro d'appel prédéterminé,
un équipement de comparaison (100) qui compare le numéro d'appel faisant l'objet d'un stockage intermédiaire avec chaque numéro d'appel enregistré et
un équipement (120, 90, 95) qui, si le résultat de la comparaison est positif, retransmet le numéro d'appel faisant l'objet d'un stockage intermédiaire à l'équipement de terminaison de réseau ou, si le résultat de la comparaison est négatif, bloque la retransmission du numéro d'appel.

2. Dispositif selon la revendication 1, **caractérisé en ce qu'**au moins un numéro d'appel prédéterminé peut être sauvegardé dans l'équipement de sauvegarde (110) pour chaque équipement terminal de données (20,30).

3. Dispositif selon l'une des revendications 1 ou 2, **caractérisé par** un dispositif de commande (120) qui efface le numéro d'appel du premier équipement de sauvegarde (80, 85) en cas de résultat négatif de la comparaison et par un décodeur de canal de commande (70) qui obtient le numéro d'appel et le numéro d'identification de l'équipement terminal de données (20, 30) à partir d'une information d'établissement de la liaison, transmise par l'équipement terminal de données (20, 30).

4. Dispositif selon la revendication 3, **caractérisé en ce que** l'équipement de commande (120) est conçu de telle façon qu'il réagit au numéro d'identification reçu du décodeur de canal de commande (70) en ne soumettant à l'équipement de comparaison (100) que les numéros d'appel sauvegardés dans le deuxième équipement de sauvegarde qui sont assignés à l'équipement terminal de données (20, 30) correspondant.

5. Dispositif selon l'une des revendications 3 ou 4, **caractérisé en ce que** l'équipement de commande (120) est conçu de telle façon qu'il désactive le décodeur de canal de commande (70) en cas de résultat positif de la comparaison.

6. Dispositif selon l'une des revendications 1 à 5, **caractérisé en ce que** le premier équipement de sauvegarde (80, 85) est un registre à décalage.

7. Dispositif selon l'une des revendications 1 à 6, **caractérisé en ce que** l'équipement de terminaison de réseau (50) présente une configuration d'accès RNIS avec interface Sₒ, **en ce que** la ligne de raccordement de l'équipement terminal est un bus Sₒ et **en ce que** le canal de commande est le canal D.

8. Dispositif selon l'une des revendications 1 à 7, **caractérisé par** un clavier servant à entrer les numéros d'appel prédéterminés.

9. Dispositif selon l'une des revendications 1 à 8, **caractérisé par** une interface permettant de raccorder un ordinateur.

10. Dispositif selon l'une des revendications 1 à 9, **caractérisé par** un équipement de signalement optique et/ou acoustique d'une coupure de la liaison en cas de résultat négatif de la comparaison.

11. Dispositif selon l'une des revendications 1 à 10, **caractérisé en ce que** le dispositif (60) est intégré dans l'équipement de terminaison de réseau (50).

12. Dispositif selon l'une des revendications 1 à 11, **caractérisé par** un équipement d'alimentation en énergie.
